Europäisches Patentamt

European Patent Office

Office européen des brevets

(19)

(11) **EP 1 352 159 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.$^7$: **F01N 3/20**, F01N 9/00

(21) Anmeldenummer: **01991691.5**

(86) Internationale Anmeldenummer:
**PCT/DE2001/004922**

(22) Anmeldetag: **22.12.2001**

(87) Internationale Veröffentlichungsnummer:
**WO 2002/053887 (11.07.2002 Gazette 2002/28)**

(54) **VERFAHREN UND VORRICHTUNG ZUR STEUERUNG EINES ABGASNACHBEHANDLUNGSSYSTEMS**

METHOD AND DEVICE FOR CONTROLLING AN EXHAUST AFTER-TREATMENT SYSTEM

PROCEDE ET DISPOSITIF DE COMMANDE D'UN SYSTEME DE POST-TRAITEMENT DES GAZ D'ECHAPPEMENT

(84) Benannte Vertragsstaaten:
**DE ES FR IT SE**

(30) Priorität: **08.01.2001 DE 10100419**

(43) Veröffentlichungstag der Anmeldung:
**15.10.2003 Patentblatt 2003/42**

(73) Patentinhaber: **ROBERT BOSCH GMBH**
**70442 Stuttgart (DE)**

(72) Erfinder:
• **RIPPER, Wolfgang**
**70327 Stuttgart (DE)**

• **MAHR, Bernd**
**73207 Plochingen (DE)**
• **STROHMAIER, Rainer**
**70563 Stuttgart (DE)**

(56) Entgegenhaltungen:
DE-A- 4 315 278      DE-A- 19 903 439
DE-C- 19 807 935      US-B1- 6 167 698

• **PATENT ABSTRACTS OF JAPAN vol. 004, no. 139 (M-034), 30. September 1980 (1980-09-30) & JP 55 093917 A (UNITIKA LTD), 16. Juli 1980 (1980-07-16)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Stand der Technik

Die Erfindung betrifft ein Verfahren und eine Vorrichtung zur Steuerung eines Abgasnachbehandlungssystems.

In der DE 199 03 439 A 1 sind ein Verfahren und eine Vorrichtung zur Steuerung einer Brennkraftmaschine beschrieben, in deren Abgaskanal ein Katalysator angeordnet ist. Stromaufwärts des Katalysators wird ein Reagenzmittel zugeführt, das im Katalysator die von der Brennkraftmaschine ausgestoßenen Stickoxide reduziert. Die Grundmenge des zuzuführenden Reagenzmittels wird anhand eines Kennfeldes festgelegt, dessen Eingangsgrößen eine Lastgröße sowie die Drehzahl der Brennkraftmaschine ist. Die Grundmenge des zuzuführenden Reagenzmittels wird von wenigstens einer weiteren, hinter der Brennkraftmaschine auftretenden Betriebskenngröße korrigiert.

Aus der DE 198 07 935 C1 ist eine Vorrichtung zur Verminderung der Stickoxid-Konzentration im Abgas einer Brennkraftmaschine bekannt geworden, bei der ebenfalls ein Reagenzmittel stromaufwärts eines Katalysators in den Abgaskanal einer Brennkraftmaschine eingebracht wird. Die Reagenzmittelmenge wird in Abhängigkeit von der Abgasgeschwindigkeit, der stromaufwärts des Katalysators gemessenen Abgastemperatur, anhand des von einem NOx-Sensor bereitgestellten NOx-Signals oder anhand des am Katalysator auftretenden Druckverlustes ermittelt.

Der Erfindung liegt die Aufgabe zugrunde, ein Verfahren und eine Vorrichtung zur Steuerung eines Abgasnachbehandlunassystems anzugeben, die eine möglichst einfache Ermittlung der Reagenzmittelmenge ermöglichen.

Die Aufgabe wird durch die in den unabhängigen Ansprüchen angegebenen Merkmale jeweils gelöst.

Vorteile der Erfindung

Die erfindungsgemäße Vorgehensweise sieht vor, dass die Reduktionsmittelmenge in Abhängigkeit von einer NOx-Konzentration, einer Abgastemperatur und einem Abgasmassenstrom festgelegt wird. Erfindungsgemäß ist vorgesehen, dass ein beheizter NOx-Sensor zur Erfassung der NOx-Konzentration vorgesehen ist und dass der Abgasmassenstrom anhand eines Heizstromsignals des NOx-Sensors bestimmt wird. Dadurch kann der Aufwand an Sensoren deutlich reduziert werden. So dient der NOx-Sensor sowohl zur Erfassung der NOx-Konzentration als auch zur Bestimmung des Abgasmassenstroms. Dabei arbeitet der NOx-Sensor in ähnlicher Weise wie bekannte Luftmassensensoren.

Die erfindungsgemäße Vorgehensweise ermöglicht eine einfache und kostengünstige Ermittlung der Reduktionsmittelmenge.

Vorteilhafte Weiterbildungen und Ausgestaltungen ergeben sich aus abhängigen Ansprüchen.

Eine Ausgestaltung sieht vor, dass die Reduktionsmittelmenge in Abhängigkeit vom NOx-Massenstrom festgelegt wird, der aus dem zuvor bestimmten Abgasmassenstrom und der vom NOx-Sensor gemessenen NOx-Konzentration ermittelt wird. Eine Ergänzung sieht vor, dass der Abgasmassenstrom weiterhin in Abhängigkeit von der Differenz zwischen der Ist-Temperatur des NOx-Sensors und der Abgastemperatur ermittelt wird.

Eine Maßnahme sieht vor, dass die Reduktionsmittelmenge in Abhängigkeit von der Differenz zwischen der Ist-Temperatur des NOx-Sensors und der Abgastemperatur festgelegt wird.

Eine Realisierung der erfindungsgemäßen Vorgehensweise ist in Form eines Computerprogramms mit Programmcode-Mitteln und in Form eines Computerprogrammprodukts mit Programmcode-Mitteln vorgesehen. Das Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird die erfindungsgemäße Vorgehensweise durch ein im Steuergerät abgespeichertes Programm realisiert, sodass dieses mit dem Programm versehene Steuergerät in gleicher Weise die Erfindung darstellt wie das Verfahren, zu dessen Ausführung das Programm geeignet ist. Das Computerprograminprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird die erfindungsgemäße Vorgehensweise durch einen Datenträger realisiert, sodass das erfindungsgemäße Verfahren ausgeführt werden kann, wenn das Programmprodukt bzw. der Datenträger in ein Steuergerät für eine Brennkraftmaschine, insbesondere eines Kraftfahrzeugs, integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher, wie beispielsweise eine CD-ROM oder DVD.

Weitere vorteilhafte Weiterbildungen und Ausgestaltungen der erfindungsgemäßen Vorgehensweise ergeben sich aus weiteren abhängigen Ansprüchen und aus der folgenden Beschreibung.

Zeichnung

Die Erfindung wird nachstehend anhand der in der Zeichnung dargestellten Ausführungsformen erläutert. Es zeigen Figur 1 ein Übersichtsblockdiagramm einer Vorrichtung zur Steuerung eines Abgasnachbehandlungssystems, Figur 2 ein Blockdiagramm einer Vorrichtung und eines Verfahrens zur Ermittlung der Menge des dem Abgasnachbehandlungssystem zugeführten Reduktionsmittel und die Figur 3 zeigt ein Blockdiagramm eines Verfahrens und einer Vorrichtung zur Ermittlung des Stickoxidmassenstroms in einem Abgasnachbehandlungssystem.

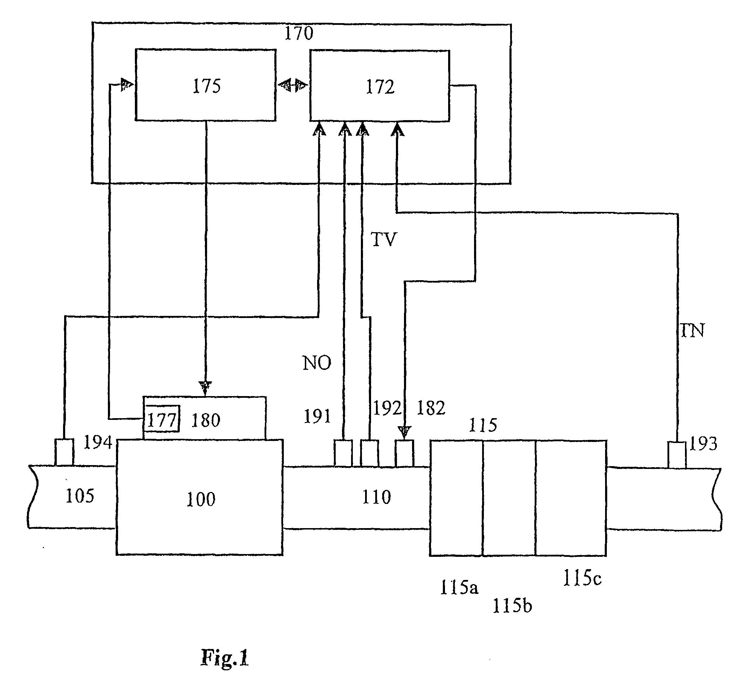

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich bei der dargestellten Ausführungsform um einen Katalysator handelt. Desweiteren ist es möglich, dass mehrere Katalysatoren für unterschiedliche Schadstoffe oder Kombinationen von wenigstens einem Katalysator und einem Partikelfilter vorgesehen sind.

Bei der bevorzugten Ausführungsform umfasst das Abgasnachbehandlungssystem 115 einen Katalysator bzw. drei Katalysatoren, in denen vorzugsweise drei Reaktionen ablaufen. In einem ersten Hydrolysekatalysator 115a wird die mit dem Stellelement 182 zugeführte Harnstoffwasserlösung in Ammoniak $NH_3$ umgesetzt. In dem anschließenden sogenannten SCR-Katalysator 115b erfolgt die eigentliche Reaktion, in der die Stickoxide und das Ammoniak zu Stickstoff und Wasser reagieren. In dem anschließenden Oxidationskatalysator 115c wird nicht verbrauchtes Ammoniak oxidiert.

Bei alternativen Ausführungsformen, bei denen andere Reduktionsmittel eingesetzt werden, können auch andere Katalysatoren Verwendung finden.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit beaufschlagt ein Stellelement 182, das in der Abgasleitung vor dem Abgasnachbehandlungssystem oder im Abgasnachbehandlungssystem angeordnet ist, mit Ansteuersignalen. Ferner tauschen die Abgasnachbehandlungssteuereinheit 172 und die Motorsteuereinheit 175 Informationen bzw. Daten aus.

Desweiteren können verschiedene Sensoren vorgesehen sein, die die Abgasnachbehandlungssteuereinheit und die Motorsteuereinheit mit Signalen versorgen. So kann wenigsten ein erster Sensor 194 vorgesehen sein, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren.

Ein Sensor 191 erfasst vorzugsweise eine Stickoxidkonzentration, die auch als zweite Größe bezeichnet wird. Ein vierter Sensor 192 erfasst vorzugsweise eine Temperaturgröße TV, die auch als Temperatur vor dem Abgasnachbehandlungssystem bezeichnet wird. Ein fünfter Sensor 193 erfasst eine Temperaturgröße TN, die auch als Temperatur nach dem Abgasnachbehandlungssystem bezeichnet wird. Bei einer weiteren Ausgestaltung kann vorgesehen sein, dass ein sogenannter Differenzdrucksensor vorgesehen ist, der eine Druckgröße erfasst, die die Druckdifferenz zwischen dem Eingang und dem Ausgang des Abgasnachbehandlungssystems charakterisiert.

Mit den Ausgangssignalen des ersten Sensors 194, des dritten Sensors 191, des vierten Sensors 192 und des fünften Sensors 193 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren. Die Verknüpfung der Sensoren ist nur beispielhaft dargestellt. Die Sensoren können mit jeder der Steuereinheiten verbunden sein wobei die entsprechenden Daten zwischen den Steuereinheiten ausgetauscht werden.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Reduktionskatalysators, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Stickoxide entstehen. Diese werden von dem Reduktionskatalysator 115b im Abgasnachbehandlungssystem 115 in Stickstoff und Wasser umgesetzt. Hierzu muß dem Abgas vor dem Abgasnachbehandlungssystem ein Reduktionsmittel zugesetzt werden.

Bei der dargestellten Ausführungsform wird dieses Reduktionsmittel mittels des Stellgliedes 182 dem Abgas zugesetzt. Als Reduktionsmittel wird vorzugsweise Ammoniak verwendet, das in dem Hydrolysekatalysator 115a ausgehend von einer Harnstofflö-

Es können auch andere Reduktionsmittel als Ausgangsbasis für Ammoniak und/oder als Ersatz für das Ammoniak verwendet werden. In diesen Fällen ist kein Hydrolyse-Katalysator erforderlich.

Ferner kann das Reduktionsmittel durch geeignete Zumessung mittels der Stellglieder 180, die üblicherweise der Brennkraftmaschine Kraftstoff zumessen, in das Abgas eingebracht werden. Dies erfolgt vorzugsweise durch eine Nacheinspritzung, die in einem bestimmten Abstand nach der eigentlichen Einspritzung erfolgt. Diese Nacheinspritzung erfolgt so spät, dass der Kraftstoff nicht mehr verbrennt.

Das Stellelement 182 ist vorzugsweise an der Abgasleitung 110 angeordnet. Es kann aber auch am Abgasnachbehandlungssystem 115 insbesondere am Hydrolyse-Katalysator 115a angebracht sein.

In der im folgenden beschriebenen Ausführungsform wird mit dem Stellelement 182 eine Harnstoffwasserlösung dem Abgasnachbehandlungssystem zugeführt. Im folgenden wird die Harnstoffwasserlösung als Reduktionsmittel bezeichnet.

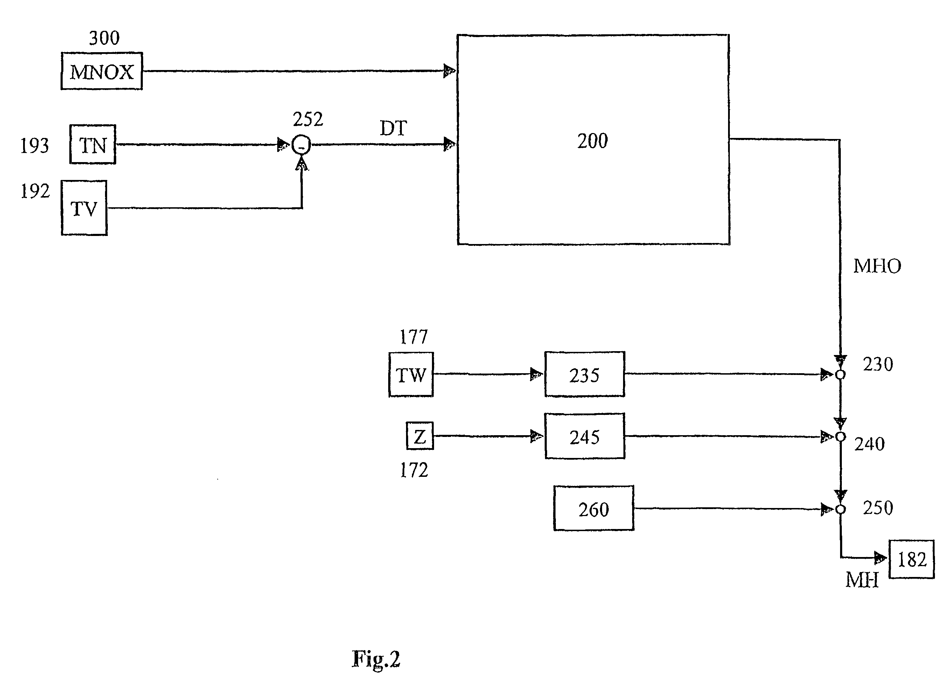

In Figur 2 ist die Ermittlung der Menge an zugeführtem Reduktionsmittel MH detaillierter dargestellt. Bereits in Figur 1 beschriebene Elemente sind mit entsprechenden Bezugszeichen bezeichnet. Ein Kennfeld 200, in dem ein Grundwert MHO für die Menge an zugeführtem Reduktionsmittel abgelegt ist, wird mit verschiedenen Signalen, wie beispielsweise dem NOx-Massenstrom MNOx, der von einer NOx-Massenstromvorgabe 300 bereitgestellt wird und einer Temperaturdifferenz DT beaufschlagt.

Die Temperaturdifferenz DT charakterisiert die Temperaturdifferenz vor und nach dem Abgasnachbehandlungssystem und entspricht in erster Näherung der mittleren Temperatur des Abgasnachbehandlungssystems. Hierzu wird das Ausgangssignal des Sensors 193, der die Temperatur TN nach dem Abgasnachbehandlungssystem erfaßt, einem Verknüpfungspunkt 252 zugeleitet. Am zweiten Eingang des Verknüpfungspunktes 252 steht die Temperatur TV, die der Temperatur vor dem Abgasnachbehandlungssystem entspricht.

Das Ausgangssignal des Kennfeldes 200 MH0 gelangt über einen ersten Verknüpfungspunkt 230 zu einem zweiten Verknüpfungspunkt 240 und von dort zu einem dritten Verknüpfungspunkt 250. Das Ausgangssignal des Verknüpfungspunktes 250 dient als Ansteuersignal MH für das Stellelement 182. Alternativ kann auch vorgesehen sein, dass ausgehend von diesem Signal das Ansteuersignal für das Stellelement 182 berechnet oder aus einem Kennfeld ausgelesen wird. Dieses Signal MH charakterisiert die Menge an dem Abgasnachbehandlungssystem zuführenden Reduktionsmittel.

An dem Verknüpfungspunkt 230 liegt zusätzlich das Ausgangssignal einer ersten Korrektur 235 an, die Einflüsse der Kühlwassertemperatur TW, die mittels des Sensors 177 erfasst wird, berücksichtigt.

Am zweiten Verknüpfungspunkt 240 liegt das Ausgangssignal der Betriebsstundenkorrektur 245 an, der Signal bezüglich der Betriebsstunden des Stellelements 182 bzw. des Abgasnachbehandlungssystems zugeleitet wird. Dieses Signal liegt vorzugsweise in der Steuereinheit 172 bzw. 175 vor.

An dem Verknüpfungspunkt 250 liegt das Ausgangssignal einer Sicherheitsabstandskorrektur 260 an.

In dem Kennfeld bzw. in den Kennfeldern 200 ist die erforderliche Menge an Reduktionsmittel bzw. das Ansteuersignal für das Stellelement 182 abhängig von dem Stickoxidmassenstrom MNOx, der Temperaturdifferenz DT der Abgastemperatur TV vor und TN nach dem Abgasnachbehandlungssystem abgelegt.

Dieser abgelegte Grundwert MH0 wird anschließend in verschiedenen Verknüpfungspunkten abhängig von der Kühlwassertemperatur, der Betriebszeit des Stellelementes 182 und einer Abstandskorrektur 260 korrigiert. Die Ermittlung der Reduktionsmittelmenge in dem Kennfeld 200 erfolgt in dem Kennfeld aufgrund des bekannten Wirkungsgrad des Katalysators.

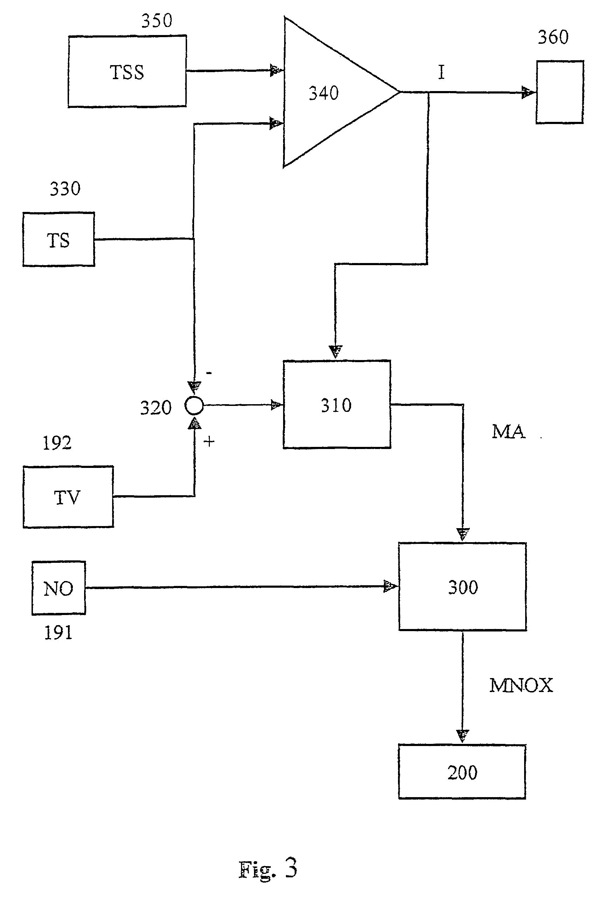

In Figur 3 ist die Stickoxidmassenstromermittlung 300 detaillierter dargestellt. Das Ausgangssignal NO, das auch als zweite Größe bezeichnet wird, und das die Stickoxidkonzentration im Abgas charakterisiert, gelangt zu der Stickoxidmassenstromermittlung 300. Desweiteren verarbeitet die Stickoxidmassenermittlung ein Signal MA, das den Abgasmassenstrom charakterisiert. Dieses wird von der Abgasmassenstromermittlung 310 bereitgestellt. Der Abgasmassenstromermittlung 310 wird zum einen das Ausgangssignal eines Verknüpfungspunktes 320 und ein Stromsignal I zugeleitet. Anstelle des Stromsignal I kann auch ein Signal, das das Stromsignal charakterisiert verwendet werden.

Am ersten Eingang des Verknüpfungspunktes 320 steht das Ausgangssignal des Sensors 192, der die Abgastemperatur TV vor dem Abgasnachbehandlungssystem erfasst an. Am zweiten Eingang des Verknüpfungspunktes 320 liegt der Istwert TS einer Temperaturregelung an. Der Verknüpfungspunkt ermittelt die Differenz dieser beiden Signale. Das Signal TS, das von einem Sensor 330 zur Erfassung der Temperatur des Stickoxidsensors 191, bereitgestellt wird, gelangt ferner zu einem Regler 340, an dessen zweiten Eingang das Signal TSS anliegt. Das Signal TSS, das dem Sollwert der Temperatur des Stickoxidsensors 191 entspricht, wird von einer Sollwertvorgabe 350 bereitgestellt. Der Regler 340 beaufschlagt ein Stellelement 360, das den Stromfluss durch den Sensor 191 beeinflusst.

Üblicherweise erfasst der Stickoxidsensor 191 die Stickoxid Emissionen der Brennkraftmaschine. Üblicherweise wird dieser Sensor auf eine konstante Temperatur beheizt. Hierzu ist eine Regelung vorgesehen. Diese Regelung ist in Figur 3 mit 340 bezeichnet. Diesem Regler wird ein Sollwert TSS und ein Istwert TS zugeführt. Ausgehend von dem Vergleich dieser beiden Werte berechnet der Regler 340 ein Ansteuersignal insbesondere einen Stromwert, um ein entsprechendes Stellelement 360 anzusteuern. Ausgehend von dem Ausgangssignal des Reglers wird dann ein entsprechender Stromfluss I durch den Sensor eingestellt, der zur Folge hat, dass die Temperatur des Sensors TS mit dem Sollwert für die Temperatur TSSS übereinstimmt.

In Abhängigkeit des Abgasmassenstromes und der Temperaturdifferenz zwischen Sensor und Abgas findet ein Wärmeübergang vom Sensor an das Abgas statt. Durch diesen Wärmeübergang würde sich der Sensor abkühlen, was jedoch durch die Temperaturregelung verhindert wird. Abhängig vom Wärmeübergang wird der Sensor mehr oder weniger stark geheizt. Der Strom I, der durch den Sensor fließt, ist somit ein Maß für den Wärmeübergang. Erfindungsgemäß bestimmt Abgasmassenstromberechnung 310 ausgehend von der Temperaturdifferenz zwischen der Temperatur TV des Abgases und der Temperatur TS des Sensors, die von dem Verknüpfungspunkt 320 ermittelt wird, und dem Strom I, der zur Heizung des Sensors auf die bestimmte Temperatur benötigt wird, den Abgasmassenstrom MA.

Der Abgasmassenstrom kühlt den Sensor 191 ab. Der Temperaturregelung des Sensors wirkt dieser Abkühlung dadurch entgegen, dass der Strom I erhöht wird. Dabei ist die Wärmemenge, die der Abgasstrom dem Sensor entnimmt gleich der Energie, die dem Sensor zusätzlich zugeführt werden muß. Für den Abgasmassenstrom MA ergibt sich hieraus die folgende Formel, mit der dieser berechnet werden kann:

$$MA = K1 * \frac{I}{TS\text{-}TV}$$

Bei der Größe K1 handelt es sich im wesentlichen um eine Konstante, die durch die Geometrie des Abgassystems bestimmt ist.

Dies bedeutet, dass eine Abgasgröße, die den Abgasmassenstrom charakterisiert, ausgehend von der Stromaufnahme eines Sensors vorgebbar ist.

Die Berechnung des Stickoxidmassenstroms MNOX erfolgt in der Stickoxidmassenstromberechnung 300 ausgehend von dem Abgasmassenstrom MA und der von dem Sensor 191 erfassten Konzentration NOX an Stickoxiden im Abgas. Dabei gilt die Beziehung:

$$MNOX = MA * NOX * K2$$

Bei der Größe K2 handelt es sich im wesentlichen um eine Konstante.

Alternativ kann vorgesehen sein, dass der Abgasmassenstrom MA ausgehend von der Druckdifferenz DP zwischen dem Eingang und dem Ausgang des Abgasnachbehandlungssystems bestimmt wird. Dabei wird der Abgasmassenstrom ausgehend von der folgenden Gleichung:

$$MA = \sqrt{K3 * DP * K4}$$

Bei der Größe K3 handelt es sich im wesentlichen um eine Konstante. Bei dem Wert P1 handelt es sich um den Druck vor dem Abgasnachbehandlungssystem. Bei dem Wert K4 handelt es sich um eine Konstante, die durch die Geometrie des Systems bestimmt ist.

Die Größe K3 besitzt eine Abhängigkeit von der Temperatur des Abgases. Durch die Berücksichtigung der Abgastemperatur TV vor dem Abgasnachbehandlungssystem kann die Genauigkeit der Berechnung erhöht werden.

Anstelle der Abgastemperatur TV vor dem Abgasnachbehandlungssystem können auch andere Temperaturwerte, die von der Abgastemperatur TV abhängen verwendet werden. Ferner kann ausgehend von anderen Meßgrößen die Abgastemperatur TV vor dem Abgasnachbehandlungssystem berechnet werden.

### Patentansprüche

1. Verfahren zur Steuerung eines Abgasnachbehandlungssystems, das wenigstens einen Katalysator (115a, 115b, 115c) umfasst, bei dem in eine Abgasleitung (110) stromaufwärts des Katalysators (115a, 115b, 115c) ein Reduktionsmittel eingebracht wird, wobei die Reduktionsmittelmenge in Abhängigkeit von einer NOx-Konzentrationen, einer Abgastemperatur und eines Abgasmassenstroms festgelegt wird, **dadurch gekennzeichnet, dass** zur Bestimmung des Abgasmassenstroms ein Stromsignal (I) verwendet wird, das ein Maß für die Heizleistung eines die NOx-Konzentration messenden NOx-Sensors (191) ist.

2. Verfahren nach Anspruch 1, **dadurch gekennzeichnet, dass** die Reduktionsmittelmenge in Abhängigkeit vom NOx-Massenstrom festgelegt wird, der aus einem Abgasmassenstrom und der vom NOx-Sensor (191) gemessenen NOx-Konzentration ermittelt wird.

3. Verfahren nach Anspruch 2, **dadurch gekennzeichnet**, das der Abgasmassenstrom in Abhängigkeit von der Differenz zwischen der Ist-Temperatur des NOx-Sensors (191) und der Abgastemperatur ermittelt wird.

4. Verfahren nach Anspruch 1, **dadurch gekennzeichnet, dass** die Reduktionsmittelmenge in Abhängigkeit von der Differenz zwischen der Ist-Temperatur des NOx-Sensors (191) und der Abgastemperatur festgelegt wird.

5. Verfahren nach Anspruch 1, **dadurch gekenn-**

**zeichnet, dass** die Abgastemperatur von einem Temperatursensor (192) erfasst wird.

6. Vorrichtung zur Steuerung eines Abgasnachbe-handlungssystems, das wenigstens einen Kataly-sator (115a, 115b, 115c) umfasst, bei dem in eine Abgasleitung (110) stromaufwärts des Katalysators (115a, 115b, 115c) ein Reduktionsmittel eingebracht wird, wobei die Reduktionsmittelmenge in Abhängigkeit von einer NOx-Konzentration, einer Abgastemperatur und eines Abgasmassenstroms festgelegt wird, **dadurch gekennzeichnet, dass** zur Erfassung der NOx-Konzentration ein beheizter NOx-Sensor (191) vorgesehen ist und dass ein Heizstromsignal (1) des NOx-Sensors ( 191) zur Bestimmung des Abgasmassenstroms herangezogen ist.

**Claims**

1. Method for controlling an exhaust-gas aftertreatment system which comprises at least one catalytic converter (115a, 115b, 115c), in which method a reducing agent is introduced into an exhaust pipe (110) upstream of the catalytic converter (115a, 115b, 115c), the quantity of reducing agent being defined as a function of an NOx concentration, an exhaust-gas temperature and an exhaust-gas mass flow, **characterized in that** a current signal (I) which is a measure of the heating power of an NOx sensor (191) measuring the NOx concentration is used to determine the exhaust-gas mass flow.

2. Method according to Claim 1, **characterized in that** the quantity of reducing agent is defined as a function of the NOx mass flow, which is determined from an exhaust-gas mass flow and the NOx concentration measured by the NOx sensor (191).

3. Method according to Claim 2, **characterized in that** the exhaust-gas mass flow is determined as a function of the difference between the actual temperature of the NOx sensor (191) and the exhaust-gas temperature.

4. Method according to Claim 1, **characterized in that** the quantity of reducing agent is defined as a function of the difference between the actual temperature of the NOx sensor (191) and the exhaust-gas temperature.

5. Method according to Claim 1, **characterized in that** the exhaust-gas temperature is recorded by a temperature sensor (192).

6. Device for controlling an exhaust-gas aftertreatment system which comprises at least one catalytic converter (115a, 115b, 115c), in which a reducing agent is introduced into an exhaust pipe (110) upstream of the catalytic converter (115a, 115b, 115c), the quantity of reducing agent being defined as a function of an NOx concentration, an exhaust-gas temperature and an exhaust-gas mass flow, **characterized in that** there is a heated NOx sensor (191) for recording the NOx concentration, and **in that** a heating current signal (I) of the NOx sensor (191) is used to determine the exhaust-gas mass flow.

**Revendications**

1. Procédé de commande d'un système de post-traitement des gaz d'échappement, comprenant au moins un catalyseur (115a, 115b,115c), selon lequel un agent de réduction est introduit dans une conduite de gaz d'échappement (110) en amont du catalyseur (115a, 115b, 115c), la quantité d'agent de réduction étant fixée en fonction d'une concen-tration de $NO_x$, d'une température de gaz d'échappement et d'un flux massique de gaz d'échappement,
**caractérisé en ce que**
pour déterminer le flux massique de gaz d'échappement on utilise un signal de courant (I) qui représente une mesure de la puissance de chauffage absorbée d'un détecteur de $NO_x$ (191) mesurant la concentration de $NO_x$.

2. Procédé selon la revendication 1,
**caractérisé en ce que**
la quantité d'agent de réduction est fixée en fonction du flux massique de $NO_x$, lequel est déterminé à partir d'un flux massique de gaz d'échappement et de la concentration de $NO_x$ mesurée par le détec-teur de $NO_x$ (191).

3. Procédé selon la revendication 2,
**caractérisé en ce que**
le flux massique de gaz d'échappement est déterminé en fonction de la différence entre la température effective du détecteur de $NO_x$ (191) et la tem-pérature de gaz d'échappement.

4. Procédé selon la revendication 1,
**caractérisé en ce que**
la quantité d'agent de réduction est déterminée en fonction de la différence entre la température effec-tive du détecteur de $NO_x$ (191) et la température de gaz d'échappement.

5. Procédé selon la revendication 1,
**caractérisé en ce que**
la température de gaz d'échappement est détectée par un détecteur de température (192).

6. Dispositif de commande d'un système de post-traitement des gaz d'échappement, comprenant au moins un catalyseur (115a, 115b, 115c), dans lequel un agent de réduction est introduit dans une conduite de gaz d'échappement (110) en amont du catalyseur (115a, 115b, 115c), la quantité d'agent de réduction étant fixée en fonction d'une concentration de NO$_x$, d'une température de gaz d'échappement et d'un flux massique de gaz d'échappement, **caractérisé en ce que**
pour détecter la concentration de NO$_x$ on a prévu un détecteur de NO$_x$ chauffé (191), et un signal de courant de chauffage (I) du détecteur de NO$_x$ (191) est utilisé pour déterminer le flux massique de gaz d'échappement.

Fig.1

**Fig.2**

EP 1 352 159 B1

Fig. 3